# EUROPEAN PATENT APPLICATION

(11) **EP 1 773 068 A2**
(43) Date of publication of application: **11.04.2007**
(21) Application number: 06119732.3
(22) Date of filing: 29.08.2006
(51) Int. Cl.: H04N 7/34

(54) **Apparatus and method for video encoding and decoding and recording medium having recorded thereon program for the method**

(30) Priority: 30.08.2005 KR 20050079991
(71) Applicant: Samsung Electronics Co., Ltd., Yeongtong-gu Suwon-city, Gyeonggi-do 442-742 (KR)
(72) Inventor: Kim, So-young, Yongsin-si, Gyeonggi-do (KR); Park, Jeong-hoon, Seoul (KR); Sohn, Yu-mi, Bundang-gu, Seognam-si, Gyeonggi-do (KR); Lee, Sang-rae 248-806 Hwanggol Maeul 2-danji, Yeongtong-gu, Suwon-si, Gyeonggi-do (KR)
(74) Representative: Brandon, Paul Laurence

(57) **Abstract**

An intraprediction encoding and decoding apparatus and a method thereof are provided to improve compression efficiency. A video encoding method includes dividing an input video into a plurality of sub-planes based on a spatial characteristic of the input video, performing intraprediction encoding on at least a first sub-plane of the plurality of sub-planes, and performing interprediction encoding on at least a second sub-plane of the plurality of sub-planes based on the intraprediction encoded first sub-plane.

## Description

The present invention relates to video methods and apparatus for compression encoding.

In well-known video compression standards such as moving picture expert group (MPEG)-1, MPEG-2, MPEG-4 Visual, H.261, H.263, and H.264, a picture is generally divided into macroblocks for video encoding. In the case of H.264 encoders, after each of the macroblocks is encoded in all encoding modes available in interprediction and intraprediction, bit rates required for encoding of a macroblock and rate-distortion (RD) costs between the original macroblock and a decoded macroblock in encoding modes are compared. Then an appropriate encoding mode is selected according to the result of the comparison and the macroblock is encoded in the selected encoding mode.

In intraprediction, a prediction value of a macroblock to be encoded is calculated using a pixel value of a pixel that is spatially adjacent to the macroblock to be encoded and a difference between the prediction value and the pixel value is encoded, instead of referring to reference pictures, in order to encode macroblocks of a current picture.

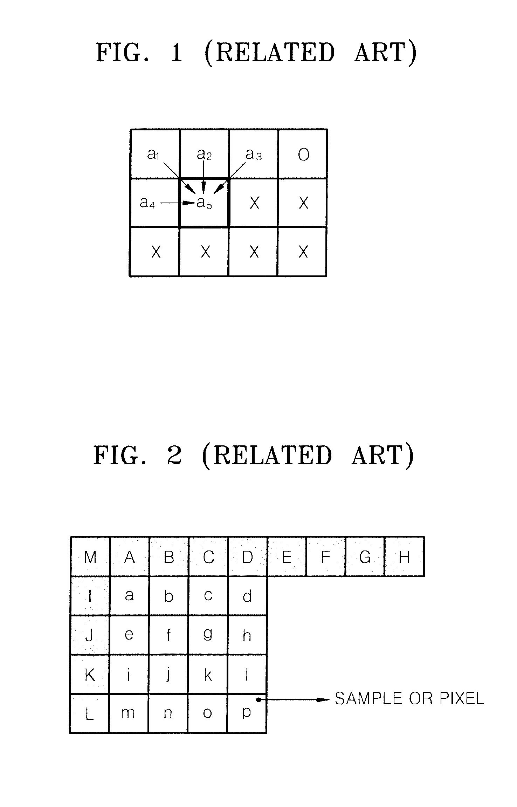

FIG. 1 illustrates previous macroblocks used for intraprediction of a current macroblock a₅ according to the related art.

Referring to FIG. 1, previous macroblocks a₁, a₂, a₃, and a₄ are used for intraprediction of a current macroblock a₅. According to a raster scan scheme, macroblocks included in a picture are scanned left-to-right and top-to-bottom. Thus, the previous macroblocks a₁, a₂, a₃, and a₄ are already scanned and encoded before the current macroblock as.

Because macroblocks marked with X have not been encoded, they cannot be used for predictive encoding of the current macroblock a₅. Because macroblocks marked with O have low correlation with the current macroblock a₅, they are not used for predictive encoding of the current macroblock a₅. After having been discrete cosine transformed and quantized, the previous macroblocks a₁, a₂, a₃, and a₄ are inversely quantized and inversely discrete cosine transformed and are then reconstructed.

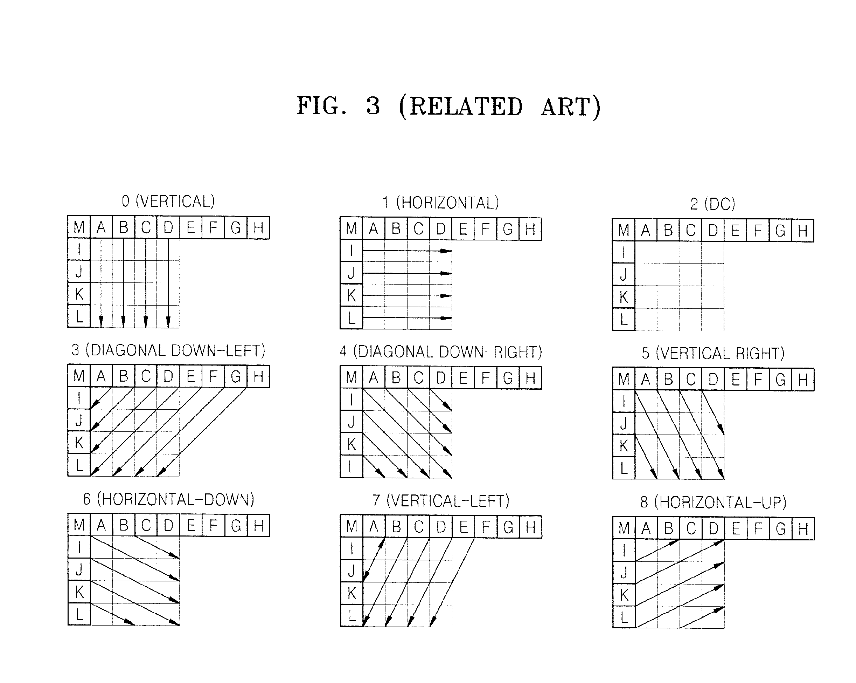

FIG. 2 is a reference diagram for explaining adjacent pixels used in intra 4 × 4 modes of H.264 according to the related art.

Referring to FIG. 2, lower-case letters a through p indicate pixels of a 4 × 4 block to be predicted, and upper-case letters A through M located above and on the left side of the 4 x 4 block indicate neighboring samples or pixels required for intraprediction of the 4 x 4 block, which have been already encoded and reconstructed.

FIG. 3 illustrates intra 4 × 4 modes used in H.264 according to the related art.

Referring to FIG. 3, the intra 4 × 4 modes include a total of 9 prediction modes, i.e., a direct current (DC) mode, a vertical mode, a horizontal mode, a diagonal down-left mode, a diagonal down-right mode, a vertical left mode, a vertical right mode, a horizontal up mode, and a horizontal down mode. In the intra 4 × 4 modes, pixel values of pixels a through p are predicted from pixels A through M of adjacent macroblocks. In encoders, compression efficiency varies with an encoding mode selected for intraprediction. To select the optimal encoding mode, prediction of a block is performed in all possible encoding modes, costs are calculated using a predetermined cost function for the encoding modes, and an encoding mode having the smallest cost is selected for encoding.

However, there still is a need for an encoding method capable of improving compression efficiency to provide high-quality video to users.

Preferred embodiments of the present invention aim to provide an intraprediction encoding and decoding apparatus and method to improve compression efficiency in conventional intraprediction of an I picture.

According to one aspect of the present invention, there is provided a video encoding method including dividing an input video into a plurality of sub-planes based on a spatial characteristic of the input video, performing first intraprediction encoding on at least one of the plurality of sub-planes, and performing interprediction encoding on at least one of remaining sub-planes of the plurality of sub-planes by referring to the first intraprediction encoded at least one sub-plane.

The video encoding method may further include determining the spatial characteristic of the input video, selecting a sub-plane type based on the determined spatial characteristic, and generating information indicating the selected sub-plane type.

The selecting of the sub-plane type may include selecting one of a plurality of sub-plane types, and the plurality of sub-planes divided according to the plurality of sub-plane types have different directivities.

The spatial characteristic of the input video may indicate the directivity of the input video. If the input video has less continuity in a horizontal direction than in a vertical direction, the selected sub-plane type is an N × M sub-plane. If the size of the input video is W × H, N and W indicate a number of horizontal pixels, and M and H indicate a number of vertical pixels, N = W / IS and M = H / I (I ≥ 1 and S ≥ 2).

The spatial characteristic of the input video may indicate the directivity of the input video. If the input video has less continuity in a vertical direction than in a horizontal direction, the selected sub-plane type is an N × M sub-plane. If the size of the input video is W × H, N and W indicate a number of horizontal pixels, and M and H indicate a number of vertical pixels, N = W / I and M = H / IS (I ≥ 1 and S ≥ 2).

The spatial characteristic of the input video may indicate the directivity of the input video. If the input video has change in both a horizontal direction and a vertical direction, the selected sub-plane type is an N × M sub-plane. If the size of the input video is W × H, N and W indicate a number of horizontal pixels, and M and H indicate a number of vertical pixels, N = W / I and M = H / I (I ≥ 2).

The video encoding method may further include performing entropy encoding on the first intraprediction encoded at least one sub-plane and the interprediction encoded at least one sub-plane, wherein the performing of the entropy encoding uses a scan method selected based on the spatial characteristic of the input video.

The dividing of the input video into the plurality of sub-planes may include sub-sampling the input video.

The performing of intraprediction encoding on at least one of the divided sub-planes may include performing intraprediction encoding on all the divided sub-planes, comparing costs of the intraprediction encoded sub-planes, and selecting one of the sub-planes for intraprediction based on the comparison result.

The input video may be a picture.
The video encoding method may further include selecting one of a plurality of scan methods based on the spatial characteristic of the input video for entropy encoding of the first intraprediction encoded at least one sub-plane or the interprediction encoded at least one sub-plane, performing entropy encoding using the selected scan method, generating mode information including at least one of sub-plane type information, information indicating the first intraprediction encoded at least one sub-plane, information about the interprediction encoding, and information indicating the selected scan method, and inserting the generated mode information into a header of a picture of a bitstream.

The sub-plane type information may include information about at least one of directivity, a size, and a number of the intraprediction encoded at least one sub-plane.

According to another aspect of the present invention, there is provided a video encoder including a video division unit, an intraprediction unit, and an interprediction unit. The video division unit divides an input video into a plurality of sub-planes based on a spatial characteristic of the input video. The intraprediction unit performs intraprediction encoding on at least one of the divided sub-planes. The interprediction unit performs interprediction encoding on at least one of remaining sub-planes of the plurality of sub-planes by referring to the intraprediction encoded sub-plane.

According to still another aspect of the present invention, there is provided a video decoding method including receiving an encoded bitstream including video data obtained by performing intraprediction encoding on at least one of a plurality of sub-planes divided from an input video based on a spatial characteristic of the input video and performing interprediction encoding on at least one of remaining sub-planes of the plurality of sub-planes based on the intraprediction encoded at least one sub-plane, extracting video data from the received bitstream, performing intraprediction decoding on the intraprediction encoded at least one sub-plane included in the extracted video data, and performing interprediction decoding on the interprediction encoded at least one sub-plane by referring to the intraprediction decoded at least one sub-plane.

The video decoding method may further include reconstructing the intraprediction decoded at least one sub-plane and the interprediction decoded at least one sub-plane to reconstruct the input video.

The received bitstream may be entropy-encoded using a scan method selected from a plurality of scan methods based on the spatial characteristic of the input video, and the encoded bitstream may further include mode information including at least one of sub-plane type information, information indicating the intraprediction encoded at least one sub-plane, information about the interprediction encoding, and information indicating the selected scan method.

The sub-plane type information may include information about at least one of directivity, size, and a number of the intraprediction encoded at least one sub-plane.

The video decoding method may further include constructing the plurality of sub-planes from the extracted video data.

The received bitstream may further include mode information, and the video decoding method may further include performing entropy decoding on the received bitstream, wherein the entropy decoding may be performed using a scan method specified by the mode information.

The encoded bitstream may further include mode information, the mode information may include at least one of sub-plane type information, information indicating the intraprediction encoded at least one sub-plane, information about the interprediction encoding, and information indicating the selected scan method, and the mode information may be extracted from a header of a picture of the received bitstream.

According to yet another aspect of the present invention, there is provided a video decoder including an entropy decoding unit, an intraprediction decoding unit, and an interprediction decoding unit. The entropy decoding unit receives an encoded bitstream including video data obtained by performing intraprediction encoding on at least one of a plurality of sub-planes divided from an input video based on a spatial characteristic of the input video and performing interprediction encoding on at least one of remaining sub-planes of the plurality of sub-planes based on the intraprediction encoded at least one sub-plane and extracts video data from the received bitstream. The intraprediction decoding unit performs intraprediction decoding on the intraprediction encoded at least one sub-plane included in the extracted video data. The interprediction decoding unit performs interprediction decoding on the interprediction encoded at least one sub-plane by referring to the intraprediction decoded at least one sub-plane.

According to yet another aspect of the present invention, there is provided a computer-readable recording medium having recorded thereon a program for a video encoding method. The video encoding method includes dividing an input video into a plurality of sub-planes based on a spatial characteristic of the input video, performing intraprediction encoding on at least one of the divided sub-planes, and performing interprediction encoding on at least one of remaining sub-planes of the plurality of sub-planes by referring to the intraprediction encoded at least one sub-plane.

According to yet another aspect of the present invention, there is provided a computer-readable recording medium having recorded thereon a program for a video decoding method. The video decoding method includes including receiving an encoded bitstream including video data obtained by performing intraprediction encoding on at least one of a plurality of sub-planes divided from an input video based on a spatial characteristic of the input video and performing interprediction encoding on at least one of remaining sub-planes of the plurality of sub-planes based on the intraprediction encoded at least one sub-plane, extracting video data from the received bitstream, performing intraprediction decoding on the intraprediction encoded at least one sub-plane included in the extracted video data, and performing interprediction decoding on the interprediction encoded at least one sub-plane by referring to the intraprediction decoded at least one sub-plane.

The present invention will become more apparent by describing in detail exemplary embodiments thereof with reference to the attached drawings, in which:
FIG. 1 illustrates previous macroblocks used for the intraprediction of a current macroblock according to the related art;
FIG. 2 is a reference diagram for explaining adjacent pixels used in intra 4 × 4 modes of H.264 according to the related art;
FIG. 3 illustrates intra 4 × 4 modes used in H.264 according to the related art;
FIG. 4 is a block diagram of a sub-plane prediction encoder according to an exemplary embodiment of the present invention;
FIGS. 5A through 5C illustrate examples of sub-plane types divided according to an exemplary embodiment of the present invention;
FIGS. 6A through 6E are views for explaining division of a video into sub-planes according to an exemplary embodiment of the present invention;
FIG. 7 illustrates division of a 352 × 288 common intermediate format (CIF) picture into two 176 × 288 sub-planes according to an exemplary embodiment of the present invention;
FIG. 8 is a flowchart illustrating sub-plane prediction performed by a sub-plane encoding unit according to an exemplary embodiment of the present invention;
FIG. 9 is a block diagram of a video encoder according to an exemplary embodiment of the present invention;
FIGS. 10A and 10B illustrate examples of a scan method applied to the present invention;
FIG. 11 is a block diagram of a sub-plane prediction decoder according to an exemplary embodiment of the present invention;
FIG. 12 is an exemplary flowchart illustrating sub-plane prediction decoding performed by a sub-plane encoding unit and a video reconstruction unit of FIG. 11;
FIG. 13 is a flowchart illustrating a sub-plane prediction decoding method according to an exemplary embodiment of the present invention;
FIG. 14 is a block diagram of a video decoder according to an exemplary embodiment of the present invention; and
FIG. 15 is a flowchart illustrating a video decoding method according to an exemplary embodiment of the present invention.

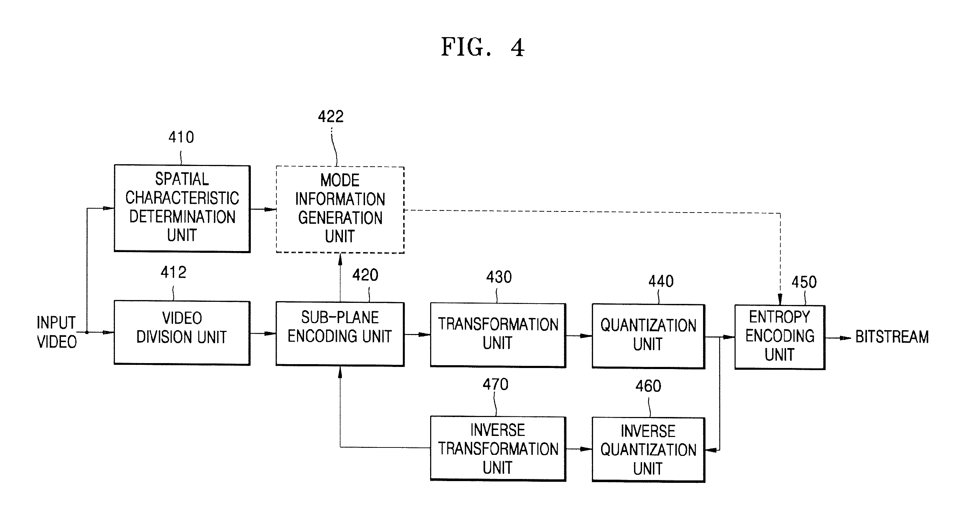

FIG. 4 is a block diagram of a sub-plane prediction encoder according to an exemplary embodiment of the present invention.

Referring to FIG. 4, an intraprediction encoder according to an exemplary embodiment of the present invention includes a spatial characteristic determination unit 410, a video division unit 412, a sub-plane encoding unit 420, a mode information generation unit 422, a transformation unit 430, a quantization unit 440, an entropy encoding unit 450, an inverse quantization unit 460, and an inverse transformation unit 470. The sub-plane encoding unit 420 includes an intraprediction unit and an interprediction unit that are not illustrated in FIG. 4.

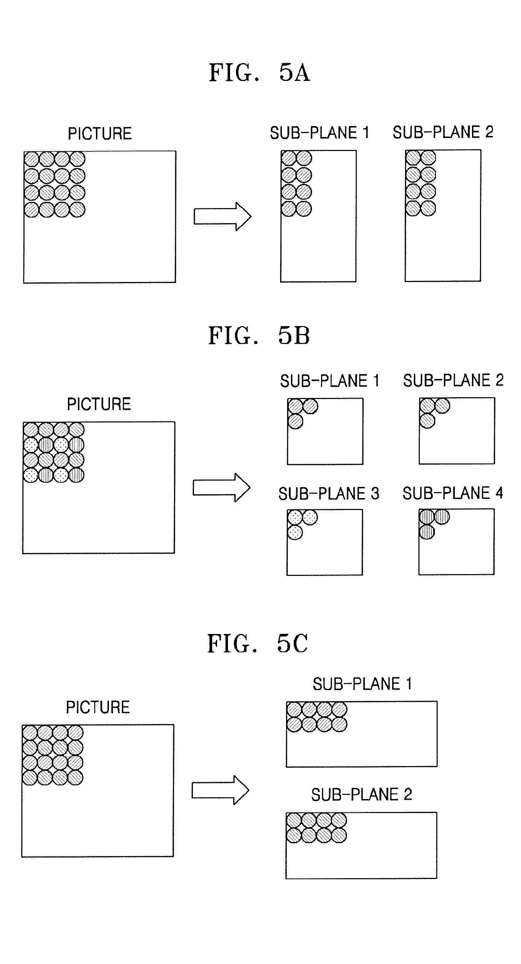

Hereinafter, an intraprediction encoding method according to an exemplary embodiment of the present invention will be described with reference to FIGS. 5A through 8.

The spatial characteristic determination unit 410 determines the spatial characteristic of an input video, e.g., a picture. The spatial characteristic of the input video may be determined based on information about the directivity of the input video, information about whether there is an edge in the input video, and information about the directivity of an edge.

In the current exemplary embodiment of the present invention, the directivity of the input video may be determined by dividing the input video into sub-plane types having different directivities, e.g., sub-planes having different sizes and different directivities as illustrated in FIGS. 5A through 5C, and obtaining differences between the sub-planes. In other words, when a difference between a sub-plane 1 and a sub-plane 2 obtained by horizontally sampling the input video as illustrated in FIG. 5A is smallest, the spatial characteristic determination unit 410 determines that the input video has a horizontal directivity.

The spatial characteristic of the input video may also be determined based on information about whether there is an edge in the input video and information about the directivity of an edge. For example, when there is an edge in the input video and the edge has a vertical directivity, the spatial characteristic determination unit 410 determines that the input video has a vertical directivity.

Once the spatial characteristic of the input video is determined as described above, the types of divided sub-planes, i.e., the shape, number, and size of divided sub-planes are determined based on the input spatial characteristic of the input video. For example, when an input video is in a common intermediate format (CIF) having a size of 352 × 288 and has much correlation in both a horizontal direction and a vertical direction, it is divided into four 176 × 144 sub-planes. When the input video has much correlation only in the horizontal direction, it is sub-sampled horizontally and thus divided into two 176 × 288 sub-planes. When the input video has much change only in the vertical direction, it is sub-sampled vertically and thus divided into two 352 × 144 sub-planes.

A user may also input the spatial characteristic of an input video. An input video may also be divided into not only sub-plane types illustrated in FIGS. 5A through 5C but also sub-planes of various sizes and shapes within a scope that does not change the spatial characteristic of the input video.

The video division unit 412 sub-samples an input video of a predetermined size, e.g., a picture, and divides the picture into a predetermined number of sub-planes. For example, when an input video is in a CIF, it may be divided into two 176 × 288 sub-planes as illustrated in FIG. 5A, four 176 × 144 sub-planes as illustrated in FIG. 5B, or two 352 × 144 sub-planes as illustrated in FIG. 5C. Although a picture is sub-sampled and divided into a plurality of sub-planes in the current exemplary embodiment of the present invention, the present invention can also be applied to a case where a block of a predetermined size is divided.

FIGS. 5A through 5C illustrate examples of sub-plane types divided according to an exemplary embodiment of the present invention. In FIG. 5A, an input video is sub-sampled horizontally to obtain two sub-planes. In FIG. 5B, the input video is sub-sampled to obtain four sub-planes. In FIG. 5C, the input video is sub-sampled vertically to obtain two sub-planes.

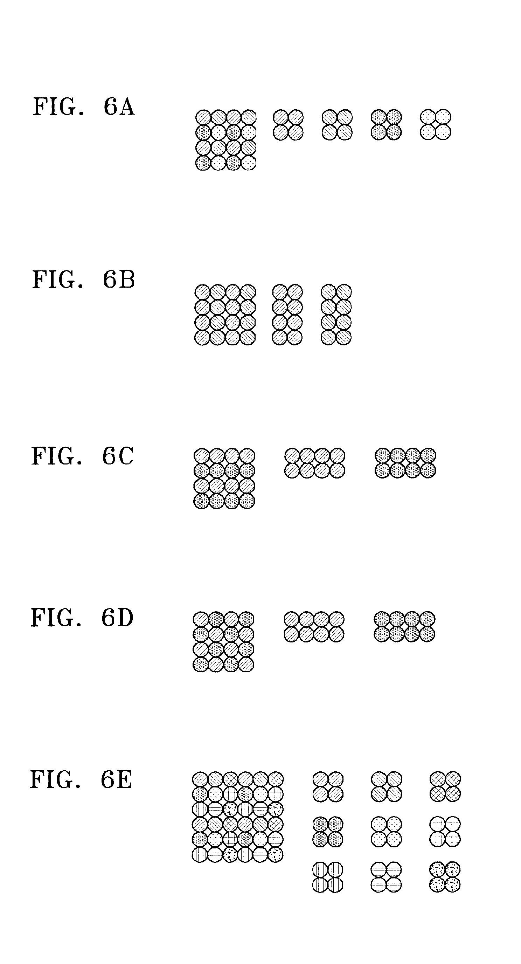

FIGS. 6A through 6E are views for explaining division of an input video into sub-planes according to an exemplary embodiment of the present invention.

In FIG. 6A, four neighboring pixels are divided into different sub-planes. In FIG. 6B, two horizontally neighboring pixels are divided into different sub-planes. In FIG. 6C, two vertically neighboring pixels are divided into different sub-planes. In FIG. 6D, two diagonally neighboring pixels are included in the same sub-plane and horizontally and vertically neighboring pixels are divided into different sub-planes. In FIG. 6E, nine neighboring pixels are divided into different sub-planes. Pixels spaced apart by 2 pixels horizontally, vertically, and diagonally are included in the same sub-plane.

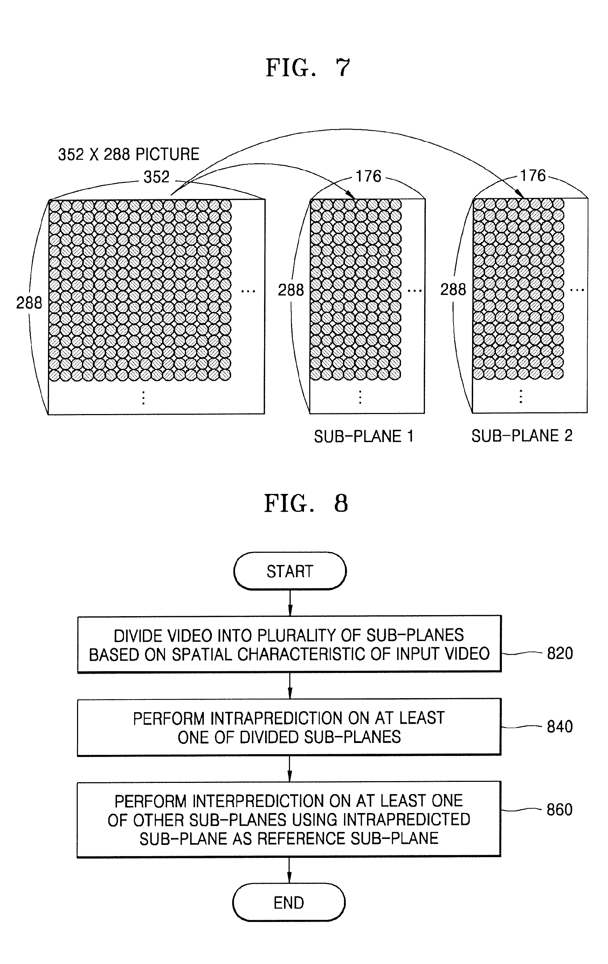

FIG. 7 illustrates division of a 352 × 288 CIF picture into two 176 × 288 sub-planes.

The intraprediction unit of the sub-plane encoding unit 420 selects one of the plurality of sub-planes divided by the video division unit 412 and performs intraprediction on the selected sub-plane. The selection of a sub-plane may be performed in such a way that a sub-plane at a predetermined position is selected or intraprediction is performed on each of the plurality of sub-planes and a sub-plane having the smallest cost is selected. Intraprediction may be performed according to a conventional intraprediction method and a detailed description thereof will not be provided.

Similarly, after intraprediction is performed on the other sub-plane, a cost of the sub-plane is determined. Costs of the sub-planes are compared and a sub-plane having the smallest cost is determined as a sub-plane for intraprediction.
Here, the cost can be calculated using various methods. For example, cost functions such as a sum of absolute difference (SAD) cost function, a sum of absolute transformed difference (SATD) cost function, a sum of square difference (SSD) cost function, a mean of absolute difference (MAD) cost function, and a Lagrange cost function may be used.

Although intraprediction encoding is performed on one of the plurality of divided sub-planes in the current exemplary embodiment of the present invention, at least one sub-plane, e.g., two sub-planes among four divided sub-planes may be first intraprediction encoded and the other two sub-planes may be interpredicted to improve compression efficiency.

Next, the interprediction unit of the sub-plane encoding unit 420 performs interprediction on the remaining sub-plane using the intrapredicted sub-plane as a reference sub-plane. For example, when a sub-plane 1 is already intrapredicted, interprediction is performed on a sub-plane 2 using the sub-plane 1 as a reference sub-plane.

Here, the intrapredicted sub-plane used as the reference sub-plane is already intraprediction decoded after intrapredicted. Alternatively, the intrapredicted sub-plane used as the reference sub-plane may be the original sub-plane that is not intraprediction encoded.

An interprediction method applied to the exemplary embodiment of the present invention is similar to a conventional interprediction method except that a reference sub-plane, instead of a reference picture, is used and motion estimation and compensation are performed using a motion vector having a small range. In interprediction according to an exemplary embodiment of the present invention, a position in a reference sub-plane, which is most similar to a current sub-plane, is indicated by a motion vector and a difference between samples of the reference sub-plane at the position and samples of the current sub-plane is encoded.

To this end, the sub-plane encoding unit 420 may further include a motion estimation and compensation unit for interprediction encoding.

Since the sub-planes in the current exemplary embodiment of the present invention are obtained by dividing an input video based on the spatial characteristic of the input video, e.g., the directivity of the input video as illustrated in FIGS. 5A and 6A, the sub-samples have high correlation and compression efficiency according to interprediction is improved.

In the current exemplary embodiment of the present invention, intraprediction is performed on a single sub-plane or a sub-plane selected from a plurality of sub-planes and interprediction is performed on the other sub-planes using the selected sub-plane as a reference sub-plane. However, after intraprediction is performed on a single sub-plane or a sub-plane selected from a plurality of sub-planes and interprediction is performed on the other sub-planes, a combination having the smallest cost may be selected. In addition, a prediction method using another combination of intraprediction and interprediction may be applied to divided sub-planes.

Although a sub-plane to be intraprediction encoded or an intraprediction encoded and decoded sub-plane is used as a reference sub-plane in interprediction encoding in the current exemplary embodiment of the present invention, interprediction encoding may be performed using not only a sub-plane to be intraprediction encoded but also previously interprediction encoded and decoded sub-planes as reference sub-planes.

The transformation unit 430 and the quantization unit 440 perform transformation and quantization on intrapredicted and interpredicted sub-planes. The transformation unit 430 and the quantization unit 440 function in the same way as those in a conventional video encoder and a detailed description thereof will not be provided. The transformation unit 430 and the quantization unit 440 may not be included in the intraprediction encoder according to an exemplary embodiment of the present invention. The mode information generation unit 422 transmits information about a determined intraprediction mode, to the entropy encoding unit 450, and the entropy encoding unit 450 inserts the mode information into a header of a bitstream to be encoded. When a video divided by the video division unit 412 is a picture, the mode information is inserted into the picture, i.e., a header of the picture. The mode information includes sub-plane type information, information indicating an intrapredicted sub-plane, and information about an interprediction encoding method. The sub-plane type information includes information such as the directivity, size, or number of divided sub-planes.

The inverse quantization 460 and the inverse quantization unit 470 perform inverse quantization and inverse transformation on transformed and quantized data and input the resulting data to the sub-plane encoding unit 420. The data input to the sub-plane encoding unit 420 is used for intraprediction or interprediction of subsequent sub-planes in the sub-plane encoding unit 420. The inverse quantization 460 and the inverse quantization unit 470 function in the same way as those in a conventional video encoder and a detailed description thereof will not be provided. When the transformation unit 430 and the quantization unit 440 are not included in the intraprediction encoder according to an exemplary embodiment of the present invention, the inverse quantization 460 and the inverse quantization unit 470 may not also be included in the intraprediction encoder.

FIG. 8 is a flowchart illustrating sub-plane prediction performed by the sub-plane encoding unit 420 of FIG. 4 according to an exemplary embodiment of the present invention.

In operation 820, an input video, e.g., a picture is sub-sampled based on the spatial characteristic of the picture and is divided into a predetermined number of sub-planes. For example, the picture is divided into two 176 × 288 sub-planes as illustrated in FIG. 5A, into four 176 × 144 sub-planes as illustrated in FIG. 5B, or into two 352 × 144 sub-planes as illustrated in FIG. 5C.

In operation 840, intraprediction is performed on at least one of the divided sub-planes. At this time, the selection of the sub-plane may be made in such a way that a sub-plane at a predetermined position is selected or intraprediction is performed on each of the divided sub-planes and a sub-plane having the smallest cost is selected.

In operation 860, interprediction is performed using the sub-plane intrapredicted in operation 840 as a reference sub-plane. Interprediction may be performed in units of a divided sub-plane or an 16 × 8, 8 × 16, 8 × 8 or 4 × 4 block included in a divided sub-plane.

Although interprediction encoding is performed using a sub-plane to be intraprediction encoded or an intraprediction encoded and decoded sub-plane as a reference sub-plane in the current exemplary embodiment of the present invention, interprediction encoding may be performed using not only a sub-plane to be intraprediction encoded or an intraprediction encoded and decoded sub-plane but also previously interprediction encoded and decoded sub-planes as reference sub-planes.

In addition, mode information about the division into the sub-plane and intraprediction and interprediction performed in operations 820 through 860 may be generated and the generated mode information may be inserted into a bitstream in entropy encoding.

Transformation and quantization may be performed on the intrapredicted sub-plane and the interpredicted sub-plane.

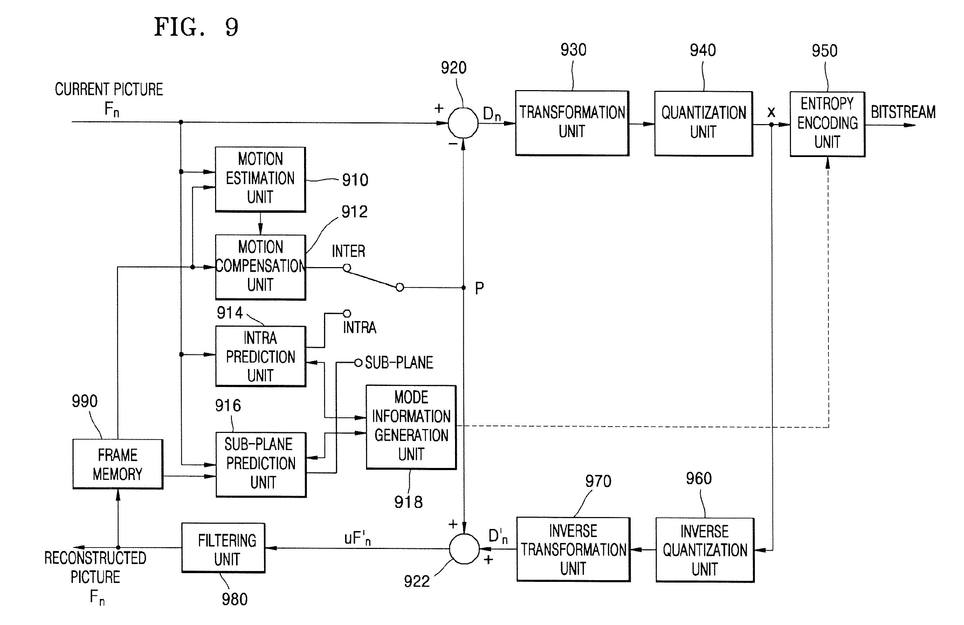

FIG. 9 is a block diagram of a video encoder according to an exemplary embodiment of the present invention.

Referring to FIG. 9, a video encoder 900 according to an exemplary embodiment of the present invention includes a motion estimation unit 910, a motion compensation unit 912, an intraprediction unit 914, a sub-plane prediction unit 916, a mode information generation unit 918, a subtraction unit 920, an adding unit 922, a transformation unit 930, a quantization unit 940, an entropy encoding unit 950, an inverse quantization unit 960, an inverse transformation unit 970, a filtering unit 980, and a frame memory 990.

Here, the other functional units except for the sub-plane prediction unit 916, the mode information generation unit 918, and the entropy encoding unit 950 function in the same way as those in a conventional video encoder, e.g., a H.264 encoder, and a detailed description thereof will not be provided.

The sub-plane prediction unit 916 corresponds to the spatial characteristic determination unit 410, the video division unit 412, and the sub-plane encoding unit 420 of FIG. 4 and the entropy encoding unit 950 corresponds to the entropy encoding unit 450 of FIG. 4.

The mode information generation unit 918 determines whether intraprediction of the input video is to be determined by the intraprediction unit 914 that performs conventional intraprediction or by the sub-plane prediction unit 916 that performs sub-plane prediction illustrated in FIG. 8, generates mode information about a selected mode, and transmits the mode information to the entropy encoding unit 950. The mode information generation unit 918 compares a cost according to the prediction result of the intraprediction unit 914 and a cost in the sub-plane prediction unit 916 to determine a prediction mode.

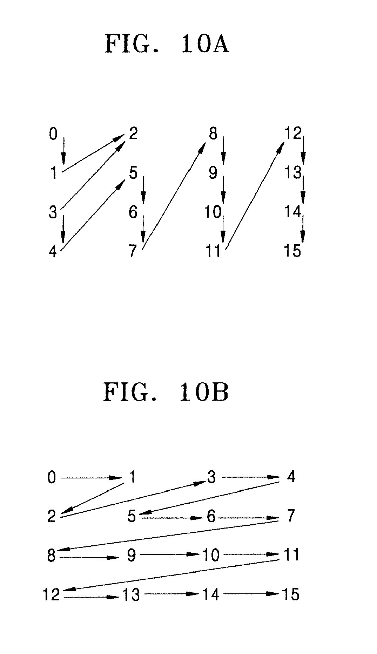

FIGS. 10A and 10B illustrate examples of a scan method applied to the present invention.

FIG. 10A illustrates a vertical sampling scan method and FIG. 10B illustrates a horizontal sampling scan method. In an exemplary embodiment of the present invention, an input video is divided into sub-planes of a predetermined type based on the characteristic of the input video and a predetermined scan method is selected to scan video data obtained by performing intraprediction on the divided sub-planes. In other words, a scan method is used adaptively according to the type of sub-planes divided from the input video. When each picture of the input video is divided into sub-planes, information about a selected scan method may be inserted into each picture.

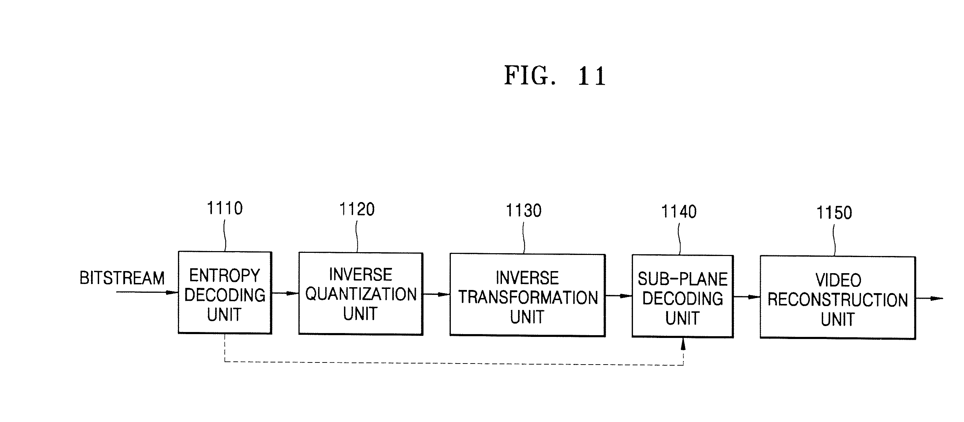

FIG. 11 is a block diagram of a sub-plane prediction decoder according to an exemplary embodiment of the present invention.

Referring to FIG. 11, the sub-plane prediction decoder includes an entropy decoding unit 1110, an inverse quantization unit 1120, an inverse transformation unit 1130, a sub-plane decoding unit 1140, and a video reconstruction unit 1150. The inverse quantization unit 1120 and the inverse transformation unit 1130 function in the same way as those in a conventional video decoder, e.g., a H.264 video decoder, and a detailed description thereof will not be provided. The sub-plane decoding unit 1140 includes an intraprediction unit and an interprediction unit that are not illustrated in FIG. 11.

The entropy decoding unit 1110 receives an encoded bitstream, performs entropy decoding on the received bitstream to extract video data, and simultaneously transmits the extracted video data to the inverse quantization unit 1120 and mode information extracted from the bitstream to the sub-plane decoding unit 1140. The mode information includes sub-plane type information, information indicating an intrapredicted sub-plane, and information about an interprediction encoding method.

The mode information may also further include information about a scan method.

Here, the received bitstream includes video data obtained by performing intraprediction on at least one of sub-planes divided from an input video of a predetermined size based on the spatial characteristic of the input video and performing interprediction encoding on at least one of the other sub-planes based on the intrapredicted sub-plane.

The inverse quantization unit 1120 and the inverse transformation unit 1130 perform inverse quantization and inverse transformation on the extracted video data. When the extracted video data are not quantized and transformed, the inverse quantization unit 1120 and the inverse transformation unit 1130 may not be included in the sub-plane prediction decoder.

The sub-plane decoding unit 1140 performs sub-plane prediction decoding according to an exemplary embodiment of the present invention on the inversely transformed video data based on the input mode information.

When the input mode information indicates that an input video, e.g., a CIF video is divided into two 176 × 288 sub-planes in an encoder, intraprediction is performed on a sub-plane 1, and interprediction is performed on a sub-plane 2 using the sub-plane 1 as a reference sub-plane, intraprediction decoding is performed on a current macroblock as follows.

The mode information includes all information for decoding in the current exemplary embodiment of the present invention, but a prediction mode table including information about all prediction modes is shared in an encoder and a decoder and only an index specifying the prediction mode table may be transmitted.

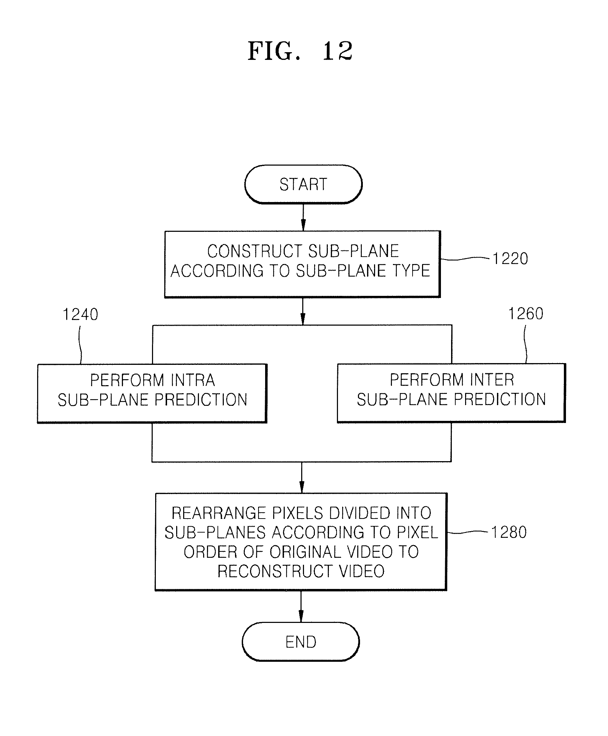

FIG. 12 is an exemplary flowchart illustrating sub-plane prediction decoding performed by the sub-plane decoding unit 1140 and the video reconstruction unit 1150 of FIG. 11.

In operation 1220, for decoding in a sub-plane prediction mode, a sub-plane, e.g., one of a 176 × 288 sub-plane, a 176 × 144 sub-plane, and a 352 × 144 sub-plane is constructed according to a sub-plane type.

Next, in operation 1240, intraprediction decoding is performed on the sub-plane 1 that is intraprediction encoded by an encoder. For example, a prediction sample is generated in a sub-plane using samples of neighboring encoded and decoded macroblocks in the similar way to a conventional method and an input residue and a prediction value obtained from the prediction sample are added, thereby reconstructing the sub-plane 1.

When decoding of the sub-plane 1 is completed, interprediction decoding is performed using the already decoded sub-plane 1 as a reference sub-plane in operation 1160. For example, when interprediction encoding is performed in units of an 180 × 288 sub-plane, motion compensation is performed on the reference sub-plane using a motion vector to obtain a prediction sub-plane and an input residue, and a prediction value obtained from the prediction sub-plane are added to obtain a reconstruction value, thereby reconstructing a sub-plane 2.

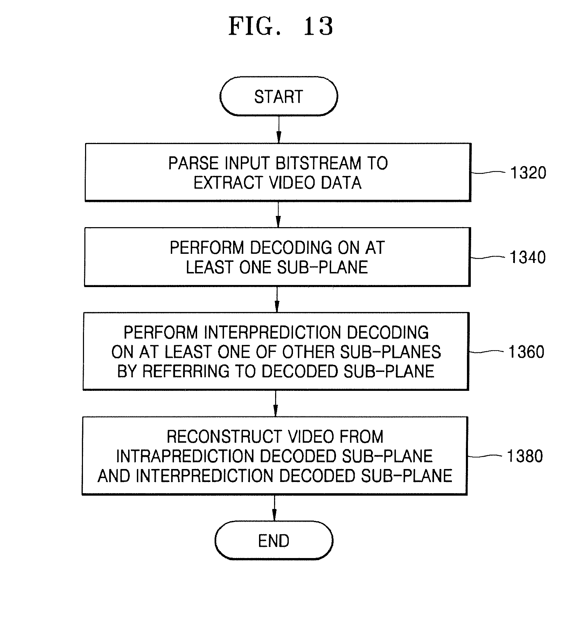

Next, the original video block is reconstructed from the sub-planes obtained by the sub-plane decoding unit 1140 (see operation 1380 of FIG. 13). In the current exemplary embodiment of the present invention, an intraprediction decoded sub-plane 1 and an interprediction decoded sub-plane 2 are reconstructed into a single picture. In other words, when the original video block is a picture, pixels divided into sub-planes are rearranged according to a pixel order of the original macroblock, thereby reconstructing the picture.

FIG. 13 is a flowchart illustrating sub-plane prediction decoding performed by the sub-plane decoding unit 1140 and the video reconstruction unit 1150 of FIG. 11.

In operation 1320, a header of a picture included in an input bitstream is parsed to extract video data. When mode information such as sub-plane type information in an encoder and information about intraprediction and interprediction is included in the input bitstream, the mode information, together with the video data, may be extracted. For convenience of explanation, the following description will be limited to a case where sub-plane prediction decoding is performed on a current picture to be decoded.

Here, the input bitstream includes video data obtained by performing intraprediction on at least one of sub-planes divided from an input video based on the spatial characteristic of the input video, e.g., the directivity of the input video, and performing interprediction encoding on at least one of the other sub-planes based on the intrapredicted sub-plane.

In operation 1340, decoding is performed on an intraprediction encoded sub-plane among the divided sub-planes. Decoding may be performed on an intraprediction encoded sub-plane based on the extracted mode information. When intraprediction decoding is performed in smaller units than the divided sub-plane, a process of reconstructing a sub-plane may also be additionally required after intraprediction decoding.

In operation 1360, interprediction decoding is performed on the other sub-planes with reference to the decoded sub-plane. The intraprediction encoded sub-plane may be decoded based on the extracted mode information. Interprediction decoding is performed on the other sub-planes using the intraprediction decoded sub-plane as a reference sub-plane in the current exemplary embodiment of the present invention, but interprediction decoding may be performed based on previously interprediction decoded sub-planes.

In operation 1380, a video, e.g., a picture is reconstructed from the intraprediction decoded sub-plane and the interprediction decoded sub-plane. Operation 1320 may further include a process of performing inverse quantization and inverse transformation on extracted video data when the extracted video data is transformed and quantized.

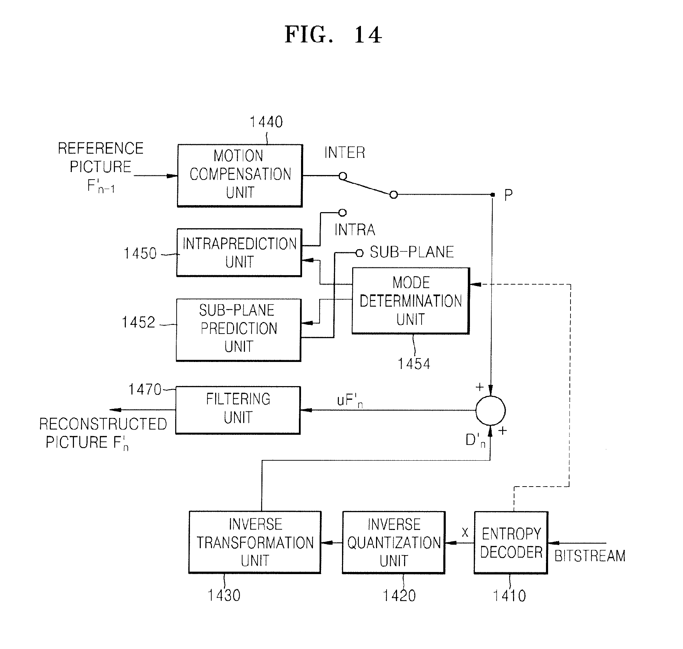

FIG. 14 is a block diagram of a video decoder according to an exemplary embodiment of the present invention is applied.

Referring to FIG. 14, the video decoder includes an entropy decoder 1410, an inverse quantization unit 1420, an inverse transformation unit 1430, a motion compensation unit 1440, an intraprediction unit 1450, a sub-plane prediction unit 1452, a mode determination unit 1454, and a filtering unit 1470.

The other functional units except for the entropy decoder 1410, the sub-plane prediction unit 1452, and the mode determination unit 1454 function in the same way as those in a conventional video decoder, e.g., a H.264 video decoder, and a detailed description thereof will not be provided.

The entropy decoder 1410 receives a compressed bitstream and performs entropy decoding on the received bitstream to extract video data and intraprediction mode information.

The inverse quantization unit 1420 and the inverse transformation unit 1430 perform inverse quantization and inverse transformation on the extracted video data.

The motion compensation unit 1440 generates a prediction block according to an encoded picture type, and the prediction block and a residue D'ₙ are added to generate uF'ₙ. uF'ₙ passes through the filtering unit 1770 to generate a reconstructed picture F'ₙ.

When the mode information extracted by the entropy decoder 1410 indicates a conventional intraprediction mode, the intraprediction unit 1450 and performs intraprediction decoding on the input video data in the same way as performed in a conventional video decoder.

When the extracted intraprediction mode information indicates an intra sub-plane mode, the sub-plane prediction unit 1452 performs intraprediction and video reconstruction on the inversely transformed video data as in the sub-plane decoding unit 1140 and the video reconstruction unit 1150 of FIG. 11. To simplify explanation, a detailed description will not be provided.

The mode determination unit 1454 determines which one of the intraprediction unit 1452 and the sub-plane prediction unit 1454 is to process the input video data according to the intraprediction mode information extracted by the entropy decoder 1410.

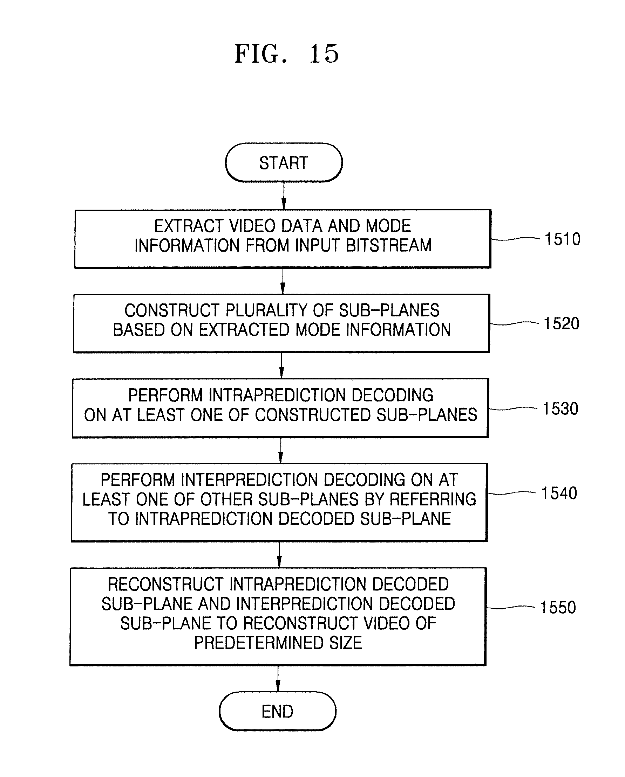

FIG. 15 is a flowchart illustrating a video decoding method according an exemplary embodiment of to the present invention.
Referring to FIG. 15, in operation 1510, a compressed bitstream is received and is entropy-decoded to extract video data and intraprediction mode information. A process of performing inverse quantization and inverse transformation on the extracted video data may be further included.

In operation 1520, a plurality of sub-planes is constructed based on the extracted mode information.

In operation 1530, intraprediction decoding is performed on at least one of a plurality of constructed sub-planes.

In operation 1540, interprediction decoding is performed on at least one of the other sub-planes with reference to the intraprediction decoded sub-plane. Interprediction decoding may be performed with reference to an intraprediction decoded sub-plane or a previously decoded sub-plane.

In operation 1550, the intraprediction decoded sub-plane and the interprediction decoded sub-planes are reconstructed to reconstruct a video of a predetermined size such as a picture.

As described above, according to preferred embodiments of the present invention, one of a plurality of sub-plane types is selected adaptively based on the spatial characteristic of an input video, the input video is divided into at least one sub-planes according to the selected sub-plane type, and intraprediction or interprediction encoding is performed on the divided sub-planes, thereby improving the compression rate of video data.

Meanwhile, the present invention can also be embodied as a computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (e.g., transmission over the Internet). The computer-readable recording medium can also be distributed over network coupled computer systems so that the computer-readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video encoding method comprising:
dividing an input video into a plurality of sub-planes based on a spatial characteristic of the input video;
performing intraprediction encoding on at least a first sub-plane of the plurality of sub-planes; and
performing interprediction encoding on at least a second sub-plane of the plurality of sub-planes based on the intraprediction encoded first sub-plane.

2. The video encoding method of claim 1, further comprising:
determining the spatial characteristic of the input video;
selecting a sub-plane type based on the determined spatial characteristic; and
generating information indicating the selected sub-plane type.

3. The video encoding method of claim 2, wherein the selecting of the sub-plane type comprises selecting one of a plurality of sub-plane types, and the plurality of sub-planes divided according to the plurality of sub-plane types have different directivities.

4. The video encoding method of any preceding claim, wherein the spatial characteristic of the input video indicates a directivity of the input video,
if the input video has less continuity in a horizontal direction than in a vertical direction, the selected sub-plane type is an N × M sub-plane, and
if a size of the input video is W × H, N and W indicate a number of horizontal pixels, and M and H indicate a number of vertical pixels, N = W / IS and M = H / I (I ≥ 1 and S ≥ 2).

5. The video encoding method of any one of claims 1-3, wherein the spatial characteristic of the input video indicates a directivity of the input video,
if the input video has less continuity in a vertical direction than in a horizontal direction, the selected sub-plane type is an N × M sub-plane, and
if a size of the input video is W × H, N and W indicate a number of horizontal pixels, and M and H indicate a number of vertical pixels, N = W / I and M = H / IS (I > 1 and S ≥ 2).

6. The video encoding method of any one of claims 1-3, wherein the spatial characteristic of the input video indicates a directivity of the input video,
if the input video has change in both a horizontal direction and a vertical direction, the selected sub-plane type is an N × M sub-plane, and
if a size of the input video is W × H, N and W indicate a number of horizontal pixels, and M and H indicate a number of vertical pixels, N = W / I and M = H / I (I ≥ 2).

7. The video encoding method of any preceding claim, further comprising performing entropy encoding on the intraprediction encoded first sub-plane and the interprediction encoded second sub-plane, wherein the performing of the entropy encoding uses a scan method selected based on the spatial characteristic of the input video.

8. The video encoding method of any preceding claim, wherein the dividing of the input video of into the plurality of sub-planes comprises sub-sampling the input video.

9. The video encoding method of any preceding claim, wherein the performing of the intraprediction encoding on at least the first sub-plane of the plurality of sub-planes comprises:
performing initial intraprediction encoding on each of the plurality of sub-planes;
comparing costs of the each of the plurality of sub-planes; and
selecting the first sub-plane for the intraprediction based on a result of the comparing of the costs.

10. The video encoding method of any preceding claim, wherein the input video is a picture.

11. The video encoding method of claim 1, further comprising:
selecting one of a plurality of scan methods based on the spatial characteristic of the input video for entropy encoding of the intraprediction encoded first sub-plane or the interprediction encoded second sub-plane;
performing entropy encoding using the selected scan method;
generating mode information comprising at least one of sub-plane type information, information indicating the intraprediction encoded first sub-plane, information about the interprediction encoding, and information indicating the selected scan method; and
inserting the generated mode information into a header of a picture of a bitstream.

12. The video encoding method of claim 11, wherein the sub-plane type information comprises information about at least one of a directivity, a size, and a number of the intraprediction encoded first sub-plane.

13. A video encoder comprising:
a video division unit (412) which divides an input video into a plurality of sub-planes based on a spatial characteristic of the input video;
an intraprediction unit (420) which performs intraprediction encoding on at least a first sub-plane of the plurality of sub-planes; and
an interprediction unit (420) which performs interprediction encoding on at least a second sub-plane of the plurality of sub-planes based on the intraprediction encoded first sub-plane.

14. The video encoder of claim 13, further comprising a spatial characteristic determination unit (410) which determines the spatial characteristic of the input video and selects a sub-plane type based on the determined spatial characteristic, wherein the spatial characteristic determination unit selects one of a plurality of sub-plane types, and the plurality of sub-planes divided according to the plurality of sub-plane types have different directivities.

15. The video encoder of claim 13, wherein the spatial characteristic of the input video indicates a directivity of the input video,
if the input video has less continuity in a horizontal direction than in a vertical direction, the selected sub-plane type is an N × M sub-plane, and
if a size of the input video is W × H, N and W indicate a number of horizontal pixels, and M and H indicate a number of vertical pixels, N = W / IS and M = H / I (I > 1 and S ≥ 2).

16. The video encoder of claim 13, wherein the spatial characteristic of the input video indicates a directivity of the input video,
if the input video has less continuity in a vertical direction than in a horizontal direction, the selected sub-plane type is an N × M sub-plane, and
if a size of the input video is W × H, N and W indicate a number of horizontal pixels, and M and H indicate a number of vertical pixels, N = W / I and M = H / IS (I > 1 and S ≥ 2).

17. The video encoder of claim 13, wherein the spatial characteristic of the input video indicates a directivity of the input video,
if the input video has change in both a horizontal direction and a vertical direction, the selected sub-plane type is an N × M sub-plane, and
if a size of the input video is W × H, N and W indicate a number of horizontal pixels, and M and H indicate a number of vertical pixels, N = W / I and M = H / I (I ≥ 2).

18. The video encoder of any one of claims 13-17, further comprising an entropy encoding unit which performs entropy encoding on the intraprediction encoded first sub-plane and the interprediction encoded second sub-plane, wherein the entropy encoding unit uses a scan method selected from a plurality of scan methods based on the spatial characteristic of the input video.

19. The video encoder of claim 18, wherein the entropy encoding unit (450) performs the entropy encoding using the selected scan method and inserts mode information comprising at least one of sub-plane type information, information indicating the intraprediction encoded first sub-plane, information about the interprediction encoding, and information indicating the selected scan method into a header of a picture of a bitstream.

20. The video encoder of claim 19, wherein the sub-plane type information comprises information about at least one of directivity, a size, and a number of the intraprediction encoded first sub-plane.

21. A video decoding method comprising:
receiving an encoded bitstream comprising video data obtained by performing intraprediction encoding on at least a first sub-plane of a plurality of sub-planes divided from an input video based on a spatial characteristic of the input video and performing interprediction encoding on at least a second sub-plane of the plurality of sub-planes based on the intraprediction encoded first sub-plane;
extracting video data from the received bitstream;
performing intraprediction decoding on the intraprediction encoded first sub-plane included in the extracted video data; and
performing interprediction decoding on the interprediction encoded second sub-plane based on the intraprediction decoded at least one sub-plane.

22. The video decoding method of claim 21, further comprising reconstructing the intraprediction decoded first sub-plane and the interprediction decoded second sub-plane to reconstruct the input video.

23. The video decoding method of claim 21 or claim 22, wherein the received bitstream is entropy-encoded using a scan method selected from a plurality of scan methods based on the spatial characteristic of the input video, and the encoded bitstream further comprises mode information including at least one of sub-plane type information, information indicating the intraprediction encoded first sub-plane, information about the interprediction encoding, and information indicating the selected scan method.

24. The video decoding method of claim 23, wherein the sub-plane type information comprises information about at least one of a directivity, size, and a number of the intraprediction encoded at least one sub-plane.

25. The video decoding method of any one of claims 21-24, further comprising constructing the plurality of sub-planes from the extracted video data.

26. The video decoding method of any one of claims 21-25, wherein the plurality of sub-planes are obtained by sub-sampling the input video.

27. The video decoding method of any one of claims 21-26, wherein the spatial characteristic of the input video indicates a directivity of the input video,
if the input video has less continuity in a horizontal direction than in a vertical direction, the selected sub-plane type is an N × M sub-plane, and
if a size of the input video is W × H, N and W indicate a number of horizontal pixels, and M and H indicate a number of vertical pixels, N = W / IS and M = H / I (I > 1 and S ≥ 2).

28. The video decoding method of any one of claims 21-26, wherein the spatial characteristic of the input video indicates a directivity of the input video,
if the input video has less continuity in a vertical direction than in a horizontal direction, the selected sub-plane type is an N × M sub-plane, and
if a size of the input video is W × H, N and W indicate a number of horizontal pixels, and M and H indicate a number of vertical pixels, N = W / I and M = H / IS (I > 1 and S ≥ 2).

29. The video decoding method of any one of claims 21-26, wherein the spatial characteristic of the input video indicates a directivity of the input video,
if the input video has change in both a horizontal direction and a vertical direction, the selected sub-plane type is an N × M sub-plane, and
if a size of the input video is W × H, N and W indicate a number of horizontal pixels, and M and H indicate a number of vertical pixels, N = W / I and M = H / I (I ≥ 2).

30. The video decoding method of any one of claims 21-29, wherein the input video is a picture.

31. The video decoding method of any one of claims 21-30, wherein the received bitstream further comprises mode information, and further comprising performing entropy decoding on the received bitstream, wherein the entropy decoding is performed using a scan method specified by the mode information.

32. The video decoding method of any one of claims 21-31, wherein the encoded bitstream further includes mode information,
the mode information comprises at least one of sub-plane type information, information indicating the intraprediction encoded first sub-plane, information about the interprediction encoding, and information indicating the selected scan method, and
the mode information is extracted from a header of a picture of the received bitstream.

33. A video decoder comprising:
an entropy decoding unit (1110) which receives an encoded bitstream comprising video data obtained by performing intraprediction encoding on at least at least a first sub-plane of a plurality of sub-planes divided from an input video based on a spatial characteristic of the input video and performing interprediction encoding on at least a second sub-plane of the plurality of sub-planes based on the intraprediction encoded first sub-plane and extracts video data from the received bitstream;
an intraprediction decoding unit (1140) which performs intraprediction decoding on the intraprediction encoded first sub-plane included in the extracted video data; and
an interprediction decoding unit (1140) which performs interprediction decoding on the interprediction encoded second sub-plane based on the intraprediction decoded at least one sub-plane.

34. The video decoder of claim 33, further comprising a video reconstruction unit (1150) which reconstructs the intraprediction decoded first sub-plane and the interprediction decoded second sub-plane to reconstruct the input video.

35. The video decoder of claim 33 or claim 34, wherein the received bitstream is entropy-encoded using a scan method selected from a plurality of scan methods based on the spatial characteristic of the input video, and the encoded bitstream further comprises mode information including at least one of sub-plane type information, information indicating the intraprediction encoded first sub-plane, information about the interprediction encoding, and information indicating the selected scan method.

36. The video decoder of claim 35, wherein the sub-plane type information comprises information about at least one of directivity, a size, and a number of the intraprediction encoded at least one sub-plane.

37. The video decoder of any one of claims 33-36, wherein the spatial characteristic of the input video indicates a directivity of the input video,
if the input video has less continuity in a horizontal direction than in a vertical direction, the selected sub-plane type is an N × M sub-plane, and
if a size of the input video is W × H, N and W indicate a number of horizontal pixels, and M and H indicate a number of vertical pixels, N = W / IS and M = H / I (I > 1 and S ≥ 2).

38. The video decoder of any one of claims 33-36, wherein the spatial characteristic of the input video indicates directivity of the input video,
if the input video has less continuity in a vertical direction than in a horizontal direction, the selected sub-plane type is an N × M sub-plane, and
if a size of the input video is W × H, N and W indicate a number of horizontal pixels, and M and H indicate a number of vertical pixels, N = W / I and M = H / IS (I > 1 and S ≥ 2).

39. The video decoder of any one of claims 33-36, wherein the spatial characteristic of the input video indicates a directivity of the input video,
if the input video has change in both a horizontal direction and a vertical direction, the selected sub-plane type is an N × M sub-plane, and
if a size of the input video is W × H, N and W indicate a number of horizontal pixels, and M and H indicate a number of vertical pixels, N = W / I and M = H / I (I ≥ 2).

40. The video decoder of any one of claims 33-39, wherein the received bitstream further comprises mode information and the entropy decoding unit performs entropy decoding on the received bitstream using a scan method specified by the mode information.

41. The video decoder of any one of claims 33-40, wherein the encoded bitstream further comprises mode information,
the mode information comprises at least one of sub-plane type information, information indicating the intraprediction encoded first sub-plane, information about the interprediction encoding, and information indicating the selected scan method, and
the mode information is extracted from a header of a picture of the received bitstream.

42. A computer-readable recording medium having recorded thereon a program for a video encoding method, the method comprising:
dividing an input video into a plurality of sub-planes based on a spatial characteristic of the input video;
performing intraprediction encoding on a first sub-plane of the plurality of sub-planes; and
performing interprediction encoding on at least a second sub-plane of the plurality of sub-planes based on the intraprediction encoded first sub-plane.

43. A computer-readable recording medium having recorded thereon a program for a video decoding method, the method comprising:
receiving an encoded bitstream comprising video data obtained by performing intraprediction encoding on at least a first sub-plane of a plurality of sub-planes divided from an input video based on a spatial characteristic of the input video and performing interprediction encoding on at least a second sub-plane of the plurality of sub-planes based on the intraprediction encoded first sub-plane;
extracting video data from the received bitstream;
performing intraprediction decoding on the intraprediction encoded first sub-plane included in the extracted video data; and
performing interprediction decoding on the interprediction encoded second sub-plane based on the intraprediction decoded first sub-plane.
